(19) Europäisches Patentamt

European Patent Office

Office européen des brevets

(11) **EP 1 287 189 B1**

(12) **EUROPÄISCHE PATENTSCHRIFT**

(45) Veröffentlichungstag und Bekanntmachung des Hinweises auf die Patenterteilung:
**18.08.2004   Patentblatt 2004/34**

(21) Anmeldenummer: **01931620.7**

(22) Anmeldetag: **18.04.2001**

(51) Int Cl.[7]: **D01D 5/06**, D01D 5/098, D01F 2/00

(86) Internationale Anmeldenummer:
**PCT/EP2001/004415**

(87) Internationale Veröffentlichungsnummer:
**WO 2001/090451 (29.11.2001 Gazette 2001/48)**

(54) **VERFAHREN ZUM EXTRUDIEREN EINES ENDLOSFORMKÖRPERS**

METHOD FOR EXTRUDING A CONTINUOUS MOULDED BODY

PROCEDE POUR L'EXTRUSION D'UN CORPS MOULE SANS FIN

(84) Benannte Vertragsstaaten:
**AT BE CH CY DE DK ES FI FR GB GR IE IT LI LU MC NL PT SE TR**

(30) Priorität: **22.05.2000   DE 10025230**

(43) Veröffentlichungstag der Anmeldung:
**05.03.2003   Patentblatt 2003/10**

(73) Patentinhaber: **Zimmer Aktiengesellschaft**
**60388 Frankfurt am Main (DE)**

(72) Erfinder:
 • **ZIKELI, Stefan**
   **A-4844 Regau (AT)**
 • **ECKER, Friedrich**
   **A-4850 Timelkam (AT)**

(74) Vertreter: **Grünecker, Kinkeldey,**
**Stockmair & Schwanhäusser Anwaltssozietät**
**Maximilianstrasse 58**
**80538 München (DE)**

(56) Entgegenhaltungen:
**WO-A-97/24476         WO-A-98/26122**
**WO-A-99/47733**

**Beschreibung**

Die Erfindung betrifft ein Verfahren zum Extrudieren eines Endlosförmkörpers aus einer Extrusionslösung, insbesondere einer Extrusionslösung enthaltend Cellulose, Wasser, tertiäres Aminoxid, sowie Zusätze zur Stabilisierung der Spinnlösung bzw. Additive in Form von organischen oder anorganischen Zusätzen, wobei das Verfahren folgende Verfahrensschritte umfasst:

- Durchleiten der Extrusionslösung durch einen Extrusionskanal mit einer vorbestimmten Länge und einem vorbestimmten Durchmesser zu einer Extrusionskanalöffnung;

- Extrudieren der Extrusionslösung durch die Extrusionskanalöffnung zu einem extrudierten Endlosformkörper;

- Durchleiten des Endlosformkörpers durch einen Luftspalt mit einer vorbestimmten Luftspalthöhe;

- Beschleunigen des Endlosformkörpers im Luftspalt.

Die durch das oben genannte Verfahren hergestellten Endlosformkörper können Fadenform, Filamentform oder Folienform aufweisen. Speziell bei der Herstellung eines Endlosformkörpers in Fadenform wird das oben bezeichnete Verfahren als Spinnverfahren zur Herstellung eines Spinnfadens verwendet.

Das oben beschriebene Verfahren ist beispielsweise aus der US-4,246,221 bekannt. In dieser Druckschrift ist die Herstellung von cellulosischen Formkörpern unter Verwendung von Spinndüsen als Extrusionskanalöffnungen beschrieben. Dabei wird ein Verfahren ausgeführt, bei dem der Spinnfaden nach dem Austritt aus der Spinndüse durch Luft geführt wird. In der Luft wird der Spinnfaden verstreckt. Das Verstrecken wird durch Aufbringen einer mechanischen Abzugskraft mittels eines nach der Spinnvorrichtung angeordneten Abzugsorgans erreicht.

In der AT-395863B ist ein weiteres Verfahren zur Herstellung eines cellulosisischen Formkörpers beschrieben. Bei diesem Verfahren ist die Höhe des Luftspaltes kurz eingestellt. Die Durchmesser der Spinndüsenöffnungen betragen bei diesem Verfahren zwischen 70 und 150 Mikrometer, die Kanallänge der Spinndüsen beträgt zwischen 1000 und 1500 Mikrometer. Durch die Verkürzung des Luftspalts und die spezielle Düsenkonfiguration sollen die Titerschwankungen sowie die Fadenrisse und die Verklebung zwischen benachbarten Fäden verringert werden.

Nachteilig bei den aus dem Stand der Technik bekannten Verfahren zur Herstellung der Endlosformkörper ist, dass eine gezielte Einflussnahme auf die Eigenschaften der Endlosformkörper, speziell deren Fibrillierungsneigung und Schlingenfestigkeit, nicht möglich ist.

Der Erfindung liegt daher die Aufgabe zugrunde, das bekannte Verfahren zum Extrudieren eines Endlosformkörpers aus einer Extrusionslösung so zu verbessern, dass die Schlingenfestigkeit verbessert und die Fibrillierungsneigung gesenkt wird.

Diese Aufgabe wird erfindungsgemäß für das eingangs genannte Verfahren dadurch gelöst, dass zusätzlich folgender Verfahrensschritt ausgeführt wird:

- Steuern der im wesentlichen über die Luftspalthöhe gemittelten Wärmestromdichte Q auf einen Wert

$$Q = \frac{0,004}{\alpha \cdot \left[\dfrac{1}{\beta}\right]^{0,3}},$$

wobei β das Verhältnis von Länge zu Durchmesser des Extrusionskanals ist und der Wert des Steuerparameters α mindestens 0,1 beträgt.

Durch diese einfache Maßnahme kann ein gutes Grundniveau bezüglich Schlingenfestigkeit sowie der Fibrillierungsneigung erreicht werden. Die Wärmestromdichte Q stellt dabei einen im wesentlichen über die Höhe H des Luftspaltes 12 gemittelten Wert des Wärmestroms in W/mm$^3$ pro Volumeneinheit des Luftspaltraumes dar. Die Wärmestromdichte ist die durch die Spinnlösung in einen den Endlosformkörper unmittelbar umgebenden Luftspaltraum eingetragene Wärmemenge. Der Luftspaltraum wird aufgespannt zwischen der Extrusionskanalöffnung und der Spinnbadoberkannte sowie des durch die Filamente gebildeten Spinnraumes.

Die Werte für mechanische und textilphysikalische Eigenschaften des Endlosformkörpers lassen sich verbessern, wenn der Wert des Steuerparameters α in einer weiteren vorteilhaften Ausgestaltung mindestens 0,2 beträgt.

Eine nochmalige Steigerung der textilen Eigenschaften des Endlosformkörpers ist möglich, wenn der Steuerparameter α in einer weiteren Ausgestaltung des Verfahrens mindestens 0,5 beträgt.

Die geringste Fibrillierungsneigung und die größte Schlingenfestigkeit wurden in einer Ausgestaltung des Verfahrens erreicht, bei der der Wert des Steuerparameters α mindestens 1,0 beträgt.

Um die Wärmestromdichte im Luftspalt zu steuern, kann die Temperatur des Endlosformkörpers oder die Temperatur der den Endlosformkörper im Luftspalt umgebenden Luft verändert werden. Die Lufttemperatur kann allgemein die Temperatur der Umgebungsluft oder die Temperatur einer entlang des Endlosformkörpers strömenden Luft sein. Die Wärmestromdichte im Luftspalt steigt mit sinkender Lufttemperatur und mit erhöhter Luftgeschwindigkeit und mit steigender Temperatur des Endlosformkörpers. Dabei ist zu beachten, dass mit der Einstellung der Luftgeschwindigkeit auch der Grad der Verstreckung beeinflusst wird.Zur Vereinfachung der Steuerung kann auch eine dieser Temperaturen jeweils konstant gehalten werden.

In einer weiteren vorteilhaften Ausgestaltung des Verfahrens kann die Wärmestromdichte Q im Luftspalt insbesondere durch folgende Maßnahme eingestellt werden:

- Steuern einer Temperaturdifferenz $\Delta T=T_E-T_L$ zwischen der Temperatur $T_E$ der Extrusionslösung und der Temperatur $T_L$ der Luft auf einen Wert:

$$\Delta T = \frac{H}{d} \cdot \frac{0{,}004}{\dot{m} \cdot c_E \cdot \alpha \cdot \left[\frac{1}{\beta}\right]^{0{,}3}},$$

wobei $\dot{m}$ der Massenstrom der Extrusionslösung durch die Extrusionskanalöffnung in g/s, $c_E$ die spezifische Wärmekapazität der Extrusionslösung in J/gK, d die Lochdichte der an der Düsenplatte angebrachten Bohrungen in Loch/mm² und H die Länge des Luftspaltes in mm ist.

Darüber hinaus können auch alle anderen in der Formelbeziehung angeführten Faktoren für die Steuerung des Spinnprozesses verwendet werden.

Der Kennwert β, der das Verhältnis der Länge des Extrusionskanals zu seinem Durchmesser bezeichnet, kann vorteilhaft mindestens 2 betragen. Besonders gute Werte für die Schlingenfestigkeit und die Fibrillierungsneigung sind dann möglich, wenn der Wert von β höchstens 150 beträgt. Die mechanischen Eigenschaften lassen sich dabei verbessern, wenn der Wert von β höchstens 100 beträgt.

Zur Stabilisierung des Endlosformkörpers nach der Extrusion und nach der Beschleunigung, d.h. der Verstreckung, kann der Endlosformkörper nach Durchquerung des Luftspalts durch ein Koagulationsbad befeuchtet werden. Die Befeuchtung kann insbesondere dadurch vorgenommen werden, dass der Endlosformkörper durch eine Befeuchtungsvorrichtung besprüht wird oder in ein Koagulationsbad eintaucht.

Die spezifische Wärmekapazität $c_E$ der Extrusionslösung kann vorteilhaft mindestens 2,1 J/(g K), höchstens 2,9 J/(g K) betragen.

In einer weiteren, vorteilhaften Ausgestaltung kann zusätzlich folgender Verfahrensschritt ausgeführt werden:

- Steuern der im Wesentlichen über die Luftspalthöhe gemittelten Beschleunigung $\bar{a}$ des Endlosformkörpers auf einen Wert

$$\bar{a} = \frac{10}{\delta \left[\frac{1}{\beta}\right]^{0{,}3}},$$

wobei β das Verhältnis von Länge zu Durchmesser des Extrusionskanals ist und der Wert des Steuerparameters δ mindestens 0,3 beträgt. Die Einheit der gemittelten Beschleunigung $\bar{a}$ ist m/s².

Durch die zusätzliche Steuerung der Beschleunigung werden die textilphysikalischen Eigenschaften, wie Schlingenfestigkeit oder Fibrillierungsneigung, nochmals verbessert. Unter der im Wesentlichen über die Luftspalthöhe gemittelten Beschleunigung ist dabei eine Beschleunigung zu verstehen, die über einen wesentlichen Bereich derjenigen Strecke gemittelt ist, die der extrudierte Endlosformkörper durch den Luftspalt zurücklegt.

Die mechanischen Eigenschaften des Endlosformkörpers lassen sich verbessern, wenn der Wert des Steuerparameters δ in einer weiteren vorteilhaften Ausgestaltung mindestens 0,6 beträgt.

Eine nochmalige Steigerung der textilen Eigenschaften des Endlosformkörpers ist überraschender Weise möglich, wenn der Steuerparameter δ in einer weiteren Ausgestaltung des Verfahrens mindestens 1,5 beträgt.

Die geringste Fibrillierungsneigung und die größte Schlingenfestigkeit wurden in einer Ausgestaltung des Verfahrens erreicht, bei der der Wert des Steuerparameters δ mindestens 2,2 beträgt.

Die mittlere Beschleunigung $\bar{a}$ kann auf einfache Weise durch eine Steuerung der Extrusionsgeschwindigkeit $v_E$ des Endlosformkörpers gesteuert werden.

Nach dem Luftspalt oder nach einem Koagulationsbad kann in einer vorteilhaften Weiterbildung des Verfahrens eine Fördereinrichtung angeordnet sein, die den Endlosformkörper im wesentlichen zugspannungsfrei zu einem Abzugswerk fördert. Auch die Fördergeschwindigkeit dieser Fördereinrichtung kann in Abhängigkeit von der mittleren Beschleunigung $\bar{a}$ gesteuert werden.

In einer weiteren vorteilhaften Ausgestaltung kann bei dem erfindungsgemäßen Verfahren der extrudierte Endlosformkörper nach der Durchquerung des Luftspalts durch ein Abzugswerk mit einer Abzugsgeschwindigkeit $v_A$ abgezogen werden. Durch das Abzugswerk wird der extrudierte Endlosformkörper unter Aufbringung einer Zugspannung weiteren Bearbeitungsschritten zugeführt.

Wird ein Abzugswerk verwendet, so lässt sich in einer vorteilhaften Weiterbildung des erfindungsgemäßen Verfahrens die Schlingenfestigkeit verbessern und die Fibrillierungsneigung verringern, wenn die Extrusionsgeschwindigkeit $v_E$ des Endlosformkörpers, mit der er aus der Extrusionskanalöffnung austritt, und/oder die Abzugsgeschwindigkeit $v_A$, mit der der Endlosformkörper durch das Abzugswerk abgezogen wird, in Abhängigkeit von der Beschleunigung $\bar{a}$ gesteuert wird.

Diese Steuerung kann insbesondere nach folgender Formel erfolgen:

$$v_A^2 - v_E^2 = \gamma \cdot H \cdot \bar{a}$$

wobei H die Luftspalthöhe und $\gamma$ ein Korrekturfaktor mit einem Wert zwischen 7 und 7,4, vorzugsweise um 7,2 ist. Die Einheiten sind für $v_A$ und $v_E$ m/min, für H mm, und für $\bar{a}$ m/s$^2$.

Das Verfahren kann in einer weiteren Ausgestaltung zusätzlich den folgenden Verfahrensschritt enthalten:

- Verstrecken des extrudierten Endlosformkörpers nach seinem Austritt aus der Extrusionskanalöffnung im Luftspalt durch eine Luftströmung in Extrusionsrichtung um den extrudierten Endlosformkörper, wobei die Strömungsgeschwindigkeit der Luft größer als die Extrusionsgeschwindigkeit des Endlosformkörpers ist.

In diesem Schritt werden die Polymer-Moleküle des Endlosformkörpers durch den Verstreckungsvorgang ausgerichtet. Durch die Luftströmung wird die für die Verstreckung notwendig Zugkraft schonend von der Mantelfläche des Endlosformkörpers her aufgebracht. Gleichzeitig kühlt die Luftströmung den Endlosformkörper, indem sie Wärme abführt.

Wird der Endlosformkörper im Luftspalt durch im wesentlichen parallel zur Extrusionsrichtung des Endlosformkörpers strömende Luft von höherer Geschwindigkeit als die Extrusionsgeschwindigkeit verstreckt, so kann die Beschleunigung $\bar{a}$ im Luftspalt auch durch Steuerung der Geschwindigkeit der Luft eingestellt werden.

Die Beschleunigung $\bar{a}$ kann durch Steuerung einer beliebigen Kombination der Extrusionsgeschwindigkeit, der Abzugsgeschwindigkeit, der Fördergeschwindigkeit der Fördereinrichtung und der Strömungsgeschwindigkeit der Luft gesteuert werden.

Im Folgenden wird das erfindungsgemäße Verfahren mit Hilfe eines Ausführungsbeispiels mit Bezug auf die beigefügte Zeichnung beschrieben.

Es zeigen:

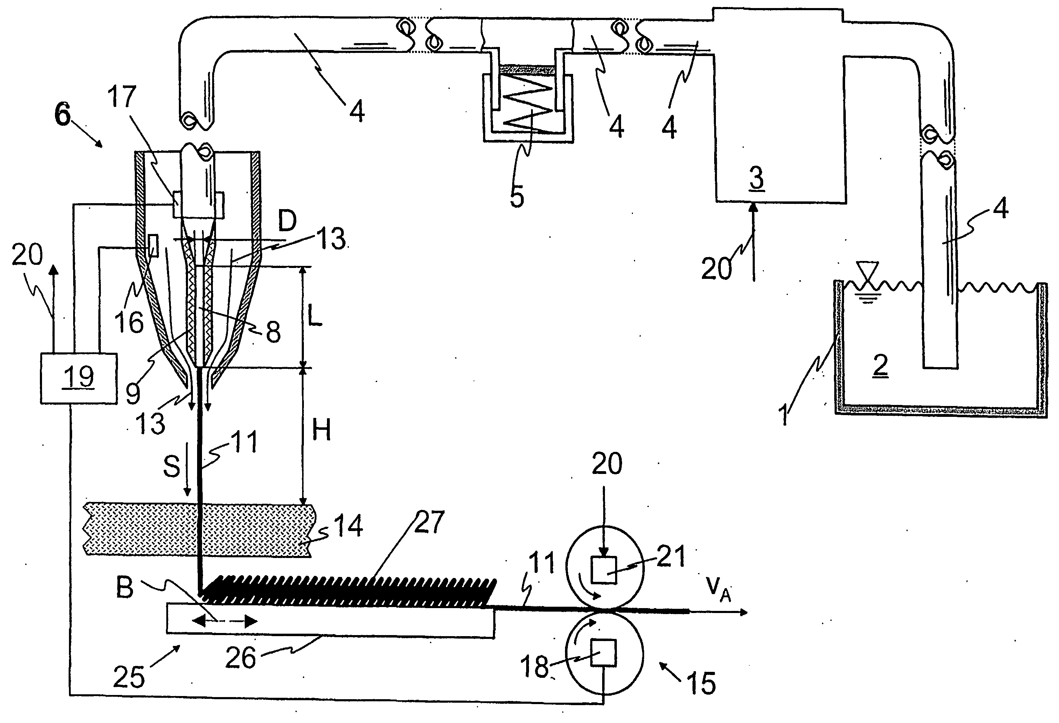

Fig. 1 eine Vorrichtung zur Durchführung des erfindungsgemäßen Verfahrens.

Zunächst wird der Ablauf des erfindungsgemäßen Verfahrens anhand der Fig. 1 beschrieben.

In einem Reaktionsbehälter 1 wird eine Extrusionslösung 2 zubereitet Die Extrusionslösung enthält Cellulose, Wasser und tertiäres Aminoxid, beispielsweise N-Methylmorpholin N-Oxid (NMMO) sowie gegebenenfalls Stabilisatoren zur thermischen Stabilisierung der Cellulose und des Lösungsmittels. Stabilisatoren können zum Beispiel sein: Propylgallat, alkalisch wirkende Medien oder Mischungen untereinander. Gegebenenfalls können weitere Additive enthalten sein, wie beispielsweise Titandioxid, Bariumsulfat, Graphit, Carboxymethylcellulosen, Polyethylenglykole, Chitin, Chitosan, Alginsäure, Polysaccharide, Farbstoffe, antibakteriell wirkende Chemikalien, Flammschutzmittel enthaltend Phosphor, Halogene oder Stickstoff, Aktivkohle, Ruße oder elektrisch leitfähige Ruße, Kieselsäure sowie organische Lösungsmittel als Verdünnungsmittel usw.

Über eine Pumpe 3 wird die Extrusionslösung 2 durch ein Leitungssystem 4 gefördert.

Im Leitungssystem 4 ist ein Druckausgleichsbehälter 5 angeordnet, der Druck- und/oder Volumenstromschwankungen im Leitungssystem 4 ausgleicht, so dass ein Extrusionskopf 6 kontinuierlich und gleichmäßig mit der Extrusionslösung 2 versorgt werden kann.

Das Leitungssystem 4 ist mit Temperierungseinrichtungen (nicht gezeigt) versehen, durch die die Temperatur der Extrusionslösung 2 genau gesteuert werden kann. Dies ist notwendig, da die chemischen und mechanischen Eigenschaften der Extrusionslösung stark temperaturabhängig sind. So sinkt die Viskosität der Extrusionslösung 2 mit steigender Temperatur und mit steigender Scherrate.

Im Leitungssystem 4 sind des Weiteren Berstschutzeinrichtungen vorgesehen, die aufgrund der Neigung der Extrusionslösung zu einer spontanen exothermen Reaktion notwendig sind. Durch die Berstschutzeinrichtungen werden Beschädigungen am Leitungssystem 4 und am Druckausgleichsbehälter 5 und im nachgeschalteten Extrusionskopf 6 vermieden.

Eine spontane exotherme Reaktion in der Extrusionslösung 2 tritt bei Überschreiten einer bestimmten Temperatur sowie bei einer Alterung der Extrusionslösung 2 vorzugsweise in Totwassergebieten auf. Um Letzteres zu vermeiden, ist das Leitungssystem 4 in dem von der hochviskosen Extrusionslösung 2 durchströmten Bereich strömungsgünstig ausgebildet.

Im Extrusionskopf 6 wird die Extrusionslösung in einem Düsenraum 7 auf eine Vielzahl von Extrusionskanälen 8 in Form von Spinnkapillaren verteilt. Die Spinnkapillaren 8 sind in Reihe, in Fig. 1 senkrecht zur Zeichenebene, angeordnet. Somit wird durch einen Extrusionskopf 6 gleichzeitig eine Vielzahl von Endlosformkörpern hergestellt. Es kann auch eine Vielzahl von Extrusionsköpfen 6 vorgesehen sein, so dass mehrere Reihen an Spinnkapillaren vorhanden sind.

Die Spinnkapillare weist einen Innendurchmesser D, von weniger als 500 Mikrometer, vorzugsweise weniger als 250 Mikrometer auf. Für Spezialanwendungen kann der Durchmesser auch weniger als 100 Mikrometer, vorzugsweise um die 50 bis 70 Mikrometer betragen.

Die von der Extrusionslösung durchströmte Länge L der Spinnkapillare beträgt mindestens das Doppelte, höchstens jedoch das 100- bis 150-fache des Innendurchmessers D.

Die Spinnkapillare 8 ist zumindest abschnittsweise von einer Heizeinrichtung 9 umgeben, durch die die Wandtemperatur der Spinnkapillare 8 steuerbar ist. Die Wandtemperatur der Spinnkapillare 8 beträgt um die 150°C. Die Temperatur der Spinnlösung etwa 100°C. Die Spinnkapillaren 8 können in beliebiger Form auch in einem Trägerkörper, welcher von außen temperiert wird, angebracht sein, sodass sich hohe Lochdichten ergeben.

Die Heizeinrichtung 9 erstreckt sich vorzugsweise bis zu der in durch Strömungsrichtung S gelegenen Austrittsöffnung 10 des Extrusionskanals. Dadurch wird die Wand des Extrusionskanals 8 bis hin zur Extrusionskanalöffnung 10 beheizt.

Durch die Beheizung des Extrusionskanals bildet sich an dessen Innenwand aufgrund der temperaturabhängigen Viskosität der Extrusionslösung eine gegenüber der Kernströmung niedrigviskose, erwärmte Filmströmung aus. Dadurch werden das Geschwindigkeitsprofil der Extrusionslösung innerhalb des Extrusionskanals 8 und der Extrusionsvorgang positiv so verändert, dass eine verbesserte Schlingenfestigkeit und eine verringerte Fibrillierungsneigung gegenüber der Stand der Technik erreicht wird.

Im Extrusionskanal 8 wird die Extrusionslösung extrudiert und tritt danach in Form eines Spinnfadens 11 in einen Luftspalt 12 aus. Der Luftspalt 12 weist in Strömungsrichtung S der Extrusionslösung eine Höhe H auf.

Koaxial zur Extrusionslösung wird im Extrusionskopf 6 Luft 13 mit hoher Geschwindigkeit entlang des Endlosformkörpers 11 geleitet. Die Strömungsgeschwindigkeit der Luft 13 kann größer sein als die Extrusionsgeschwindigkeit $v_E$ des Spinnfadens, mit der der Endlosformkörper aus der Extrusionskanalöffnung 10 austritt. Dadurch wirkt an der Grenzfläche zwischen Endlosformkörper 11 und Luft 13 eine Zugspannung, durch die der Endlosformkörper 11 auch verstreckt werden.

Nach Durchquerung des Luftspaltes 12 tritt der Endlosformkörper in eine Koagulationsbadzone 14, in der er mit einer Koagulationslösung befeuchtet wird. Die Befeuchtung kann entweder mittels einer Sprüh- oder Benetzungsvorrichtung (nicht gezeigt) geschehen. Alternativ kann der Endlosformkörper 11 auch in ein Koagulationsbad eintauchen. Durch die Koagulationslösung wird die Extrusionslösung stabilisiert.

Nach der Koagulationsbadzone 14 wird der Endlosformkörper 11 durch ein Abzugswerk 15 mit einer Abzugsgeschwindigkeit $v_A$ abgezogen und weiteren Bearbeitungsschritten zugeführt, die hier nicht dargestellt sind. Zwischen Koagulationsbadzone 14 und Abzugswerk 15 können verschiedene weitere Bearbeitungseinrichtungen vorgesehen sein. Beispielsweise kann der Endlosformkörper 11 gewaschen und gepresst werden.

Die Extrusionslösung wurde für die Extrusion auf eine Temperatur gebracht, in der sie zähflüssig ist und somit formstabil durch den Extrusionskanal 8 und die Extrusionskanalöffnung 10 extrudiert werden kann. Nach der Extrusion, im Luftspalt 12, muss der Endlosformkörper abgekühlt werden. Dazu muss ein vom Endlosformkörper 11 in den Luftspalt 12 gerichteter Wärmestrom aufgebaut werden.

Die mechanischen Eigenschaften des Endlosformkörpers 11 hängen entscheidend von den Verfahrensschritten unmittelbar vor oder nach der Extrusion ab.

So kann die Schlingenfestigkeit des Endlosformkörpers verbessert und die Fibrillierungsneigung verringert werden, wenn die Wärmestromdichte Q im Luftspalt auf einen Wert

$$Q = \frac{0{,}004}{\alpha \cdot \left[\dfrac{1}{\beta}\right]^{0,3}}$$

gesteuert wird, wobei β das Verhältnis von Länge L zum Durchmesser D des Extrusionskanals 8 ist und der Wert des Steuerparameters α mindestens 0,1 beträgt.

Die Kenngröße β=L/D kann Werte zwischen 2 und 150, bevorzugt im Bereich zwischen 50 und 100 annehmen.

In der obigen Formel stellt α einen Steuerparameter dar, dessen Wert mindestens 0,1 beträgt. In einer weiteren Variante kann der Wert des Steuerparameters α mindestens 0,2 betragen. Bevorzugt beträgt das Steuerparameter α mindestens 0,5, besonders bevorzugt mindestens 1.

Die Wärmestromdichte Q stellt dabei einen im wesentlichen über die Höhe H des Luftspaltes 12 gemittelten Wert des Wärmestroms in W/mm$^3$ pro Volumeneinheit des Luftspaltraumes dar. Die Wärmestromdichte ist die durch die Spinnlösung in den das Filament unmittelbar umgebenden Luftspaltraum eingetragene Wärmemenge. Der Luftspaltraum ist jeweils einer Extrusionskanalöffnung 10 zugeordnet und wird gebildet durch ein Bilanzvolumen V, das den Endlosformkörper 11 im Luftspalt 12 umgibt. Im Luftspaltraum V wird der durch den Endlosformkörper 11 eingebrachte Wärmestrom mit der aus dem Luftspaltraum austretenden Wärme bilanziert. In dieser Wärmebilanz sind als negative Wärmeströme die vom aus dem Bilanzvolumen austretenden Endlosformkörper und die von der stehenden oder bewegten Luft 13, die den Endlosformkörper 11 im Luftspalt 12 umgibt, abgeleitete Wärme sowie die abgestrahlte Wärme zu berücksichtigen.

Bei Extrusions- oder Spinnköpfen 6 mit einer Vielzahl von benachbarten Extrusionskanälen 8 grenzen die Bilanzvolumen der einzelnen Extrusionskanäle 8 aneinander, sodass sich die Wärmeströme der einzelnen Endlosformkörper 11 gegenseitig beeinflussen. Der gegenseitige Einfluss der nahe nebeneinander liegenden Endlosformkörper wird bei der erfindungsgemäßen Verfahrenssteuerung berücksichtigt.

Die Wärmestromdichte Q wird im wesentlichen durch die Lufttemperatur sowie durch die Temperatur des Endlosformkörpers und der durch den Endlosformkörper eingetragenen Wärmemenge bestimmt. Beim Ausführungsbeispiel wird daher die Temperaturdifferenz $\Delta T = T_E - T_L$ zwischen der Temperatur $T_E$ der Extrusionslösung und der Temperatur $T_L$ der Luft auf einen Wert:

$$\Delta T = \frac{H}{d} \cdot \frac{0,004}{\dot{m} \cdot c_E \cdot \alpha \cdot \left[\frac{1}{\beta}\right]^{0,3}}$$

eingestellt, wobei $\dot{m}$ der Massendurchsatz der Extrusionslösung durch die Extrusionskanalöffnung in g/s, $c_E$ die spezifische Wärmekapazität der Extrusionslösung in J/gK, d die Lochdichte der Extrusionskanalöffnungen pro Flächeneinheit in Loch/mm$^2$ und H die Länge des Luftspaltes 12 in mm ist.

Dabei kann entweder die Temperatur $T_E$ des Endlosformkörpers 11 oder die Temperatur $T_L$ der Luft 13 oder auch beide Temperaturen gleichzeitig gesteuert werden.

Darüber hinaus können auch alle anderen in der Formelbeziehung angeführten Faktoren für die Steuerung des Spinnprozesses verwendet werden.

Zusätzlich zur Wärmestromdichte oder auch anstelle der Wärmestromdichte kann die mitlere Beschleunigung $\bar{a}$ des Endlosformkörpers in m/s$^2$ 11 im Luftspalt 12 so eingestellt werden, dass sie folgenden Wert hat:

$$\bar{a} = \frac{10}{\delta \left[\frac{1}{\beta}\right]^{0,3}}$$

wobei $\beta$ das Verhältnis der Länge zum Durchmesser (UD) des Extrusionskanals 8 ist. Die Größe $\delta$ stellt einen Steuerparameter dar, dessen Wert mindestens 0,3 beträgt. In einer weiteren Variante kann der Wert des Steuerparameters $\delta$ mindestens 0,6 betragen. Bevorzugt beträgt der Steuerparameter $\delta$ mindestens 1,5, besonders bevorzugt mindestens 2,2.

Die mittlere Beschleunigung des Endlosformkörpers 11 im Luftspalt 12 ist die über einen wesentlichen Teil der Luftspalthöhe H gemittelte Beschleunigung.

Die Beschleunigung $\bar{a}$ kann durch Änderung der Strömungsgeschwindigkeit der Luft 13, durch Änderung der Extrusionsgeschwindigkeit $v_E$ der Extrusionslösung 2 an der Extrusionskanalöffnung 10 oder durch Änderung der Abzugsgeschwindigkeit $v_A$ des Abzugswerks 15 eingestellt werden. Dabei sind auch beliebige Kombinationen der Einstellungen dieser Geschwindigkeiten möglich.

Zur Erfassung der Strömungsgeschwindigkeit der Luft 13 kann ein Sensor 16 vorgesehen sein. Ebenso können zur Erfassung der Extrusionsgeschwindigkeit $v_E$ ein Sensor 17 und zur Erfassung der Abzugsgeschwindigkeit $v_A$ ein Sensor 18 vorgesehen sein. Die Sensoren 16, 17, 18 geben Signale aus, die jeweils repräsentativ für die von ihnen gemessenen Geschwindigkeiten sind. Diese Signale werden in elektrischer Form einer Steuerungseinrichtung 19 zugeführt, die diese Signale verarbeitet und ein Steuersignal 20 ausgibt. Dieses Steuersignal 20 kann an die Pumpe 3 geleitet werden, um die Extrusionsgeschwindigkeit $v_E$ der dem Extrusionskopf 6 zugeführten Spinnmasse einzustellen. Der Sensor 17 kann auch in Kombination mit einer im Extrusionskopf 6 integrierten Präzisionsspinnpumpe (nicht gezeigt) verwendet werden. Das Steuersignal 20 kann aber auch einen Motor 21 zum Antrieb des Abzugswerkes 15 zugeführt werden, um die Abzugsgeschwindigkeit $v_A$ einzustellen. Schließlich kann das Steuersignal 20 auch einer Einrichtung (nicht gezeigt) zur Zufuhr der Luft 13 zugeführt werden, um die Geschwindigkeit der Luft 13 einzustellen. Auf diese Weise kann ein Regelkreis zur rückgekoppelten Steuerung der Beschleunigung $\bar{a}$ aufgebaut werden.

Die Extrusionsgeschwindigkeit $v_E$ kann unabhängig oder zusammen mit der Abzugsgeschwindigkeit $v_A$ gesteuert werden. Beim Ausführungsbeispiel der Fig. 1 kann zwischen einer Steuerung nur der Extrusionsgeschwindigkeit $v_E$, nur der Abzugsgeschwindigkeit $v_A$ und einer kombinierten Steuerung beider Geschwindigkeiten so umgestaltet werden, dass die folgende Formel erfüllt ist:

$$v_A^2 - v_E^2 = \gamma \cdot H \cdot \bar{a},$$

wobei H die Luftspalthöhe und $\gamma$ ein Korrekturfaktor mit einem Wert zwischen 7 und 7,4 ist. Insbesondere kann der Wert des Korrekturfaktors um 7,2 betragen.

Im Ausführungsbeispiel ist zwischen dem Luftspalt 12 bzw. der Koagulationsbadzone 14 und dem Abzugswerk 15 eine weitere Fördereinrichtung 25 dargestellt. Diese optionale Fördereinrichtung 25 fördert den Endlosformkörper 11 im wesentlichen zugspannungsfrei zum Abzugswerk 15.

Hierzu kann eine Fördereinrichtung in Form eines Schüttel- oder Vibrationsförderers 25 verwendet werden, bei dem der Endlosformkörper 11 durch hin- und hergehende Bewegungen B einer Auflage- und Transportfläche 26 schonend gefördert wird.

Die Fördergeschwindigkeit der Fördereinrichtung 25 ist wesentlich kleiner als die Extrusionsgeschwindigkeit $v_E$ oder die Abzugsgeschwindigkeit $v_A$, die in etwa gleich sind. Folglich wirkt die Fördereinrichtung 25 als ein Puffer, auf dem der Endlosformkörper 11 in geometrisch geordneter Form 27 gestapelt abgelegt wird, bevor er durch das Abzugswerk 15 abgezogen wird. Über entsprechende Sensoren (nicht gezeigt) kann auch die Fördergeschwindigkeit der Fördereinrichtung 25 in Abhängigkeit von der mittleren Beschleunigung $\bar{a}$ im Luftspalt gesteuert werden.

Durch die zugspannungsfreie Förderung des Endlosformkörpers 11 in diesem Bereich, in dem er sich nach der Extrusion stabilisiert, wird eine nochmalige Steigerung der Schlingenfestigkeit und eine erheblich verringerte Fibrillierungsneigung erhalten.

**Patentansprüche**

1.  Verfahren zum Extrudieren eines Endlosförmkörpers aus einer Extrusionslösung, insbesondere einer Extrusionslösung enthaltend Cellulose, Wasser und tertiäres Aminoxid, umfassend folgende Verfahrensschritte:

    -   Durchleiten der Extrusionslösung durch einen Extrusionskanal mit einer vorbestimmten Länge und einem vorbestimmten Durchmesser zu einer Extrusionskanalöffnung;
    -   Extrudieren der Extrusionslösung durch die Extrusionskanalöffnung zu einem extrudierten Endlosformkörper;
    -   Durchleiten des Endlosformkörpers durch einen Luftspalt mit einer vorbestimmten Luftspalthöhe;
    -   Beschleunigen des Endlosformkörpers im Luftspalt;

    **gekennzeichnet durch** folgenden Verfahrensschritt:

    -   Steuern der im wesentlichen über die Luftspalthöhe gemittelten Wärmestromdichte Q auf einen Wert

$$Q = \frac{0,004}{\alpha \cdot \left[\frac{1}{\beta}\right]^{0,3}},$$

    wobei β das Verhältnis von Länge zu Durchmesser des Extrusionskanals ist und der Wert des Steuerparameters α mindestens 0,1 beträgt.

2.  Verfahren nach Anspruch 1, **dadurch gekennzeichnet, dass** der Wert des Steuerparameters α mindestens 0,2 beträgt.

3.  Verfahren nach Anspruch 2, **dadurch gekennzeichnet, dass** der Wert des Steuerparameters α mindestens 0,5 beträgt.

4.  Verfahren nach Anspruch 3, **dadurch gekennzeichnet, dass** der Wert des Steuerparameters α mindestens 1,0 beträgt.

5.  Verfahren nach einem der oben genannten Ansprüche, **gekennzeichnet durch** folgenden Verfahrensschritt:

    -   Steuern der Temperatur $T_E$ der Extrusionslösung in Abhängigkeit von der Wärmestromdichte Q.

6.  Verfahren nach einem der oben genannten Ansprüche, **gekennzeichnet durch** folgenden Verfahrensschritt:

    -   Steuern der Temperatur $T_L$ der den Endlosformkörper (11) im Luftspalt (12) umgebenden Luft in Abhängigkeit von der Wärmestromdichte Q.

7.  Verfahren nach Anspruch 5 und/oder 6, **gekennzeichnet durch** folgenden Verfahrensschritt:

    -   Steuern einer Temperaturdifferenz $\Delta T = T_E - T_L$ zwischen der Temperatur $T_E$ der Extrusionslösung und der Temperatur $T_L$ der den Endlosformkörper (11) im Luftspalt (12) umgebenden Luft auf einen Wert:

$$\Delta T = \frac{H}{d} \cdot \frac{0,004}{\dot{m} \cdot c_E \cdot \alpha \cdot \left[\frac{1}{\beta}\right]^{0,3}},$$

    wobei $\dot{m}$ der Massendurchsatz der Extrusionslösung **durch** die Extrusionskanalöffnung in g/s, $c_E$ die spezifische Wärmekapazität der Extrusionslösung , in $W/mm^3$, d die Lochdichte der an der Düsenplatte angebrachten Bohrungen In $Loch/mm^2$ und H in mm die Länge des Luftspaltes ist.

8.  Verfahren nach Anspruch 7, **dadurch gekenn-**

**zeichnet, dass** der Wert β mindestens 2 beträgt.

**9.** Verfahren nach Anspruch 8, **dadurch gekennzeichnet, dass** der Wert β höchstens 150 beträgt.

**10.** Verfahren nach Anspruch 9, **dadurch gekennzeichnet, dass** der Wert β höchstens 100 beträgt.

**11.** Verfahren nach Anspruch 5 bis 10, **dadurch gekennzeichnet, dass** die Temperatur $T_L$ bei im wesentlichen konstant gehaltener Temperatur $T_E$ gesteuert wird.

**12.** Verfahren nach Anspruch 5 bis 10, **dadurch gekennzeichnet, dass** die Temperatur $T_E$ bei im wesentlichen konstant gehaltener Temperatur $T_L$ gesteuert wird.

**13.** Verfahren nach einem der oben genannten Ansprüche, **dadurch gekennzeichnet, dass** die spezifische Wärmekapazität $c_E$ der Extrusionslösung mindestens 2,1 J/(g K) beträgt.

**14.** Verfahren nach einem der oben genannten Ansprüche, **dadurch gekennzeichnet, dass** die spezifische Wärmekapazität $c_E$ der Extrusionslösung höchstens 2,9 J/(g K) beträgt.

**15.** Verfahren nach einem der oben genannten Ansprüche, **gekennzeichnet durch** folgenden Verfahrensschritt:

- Steuern der im wesentlichen über die Luftspalthöhe (H) gemittelten Beschleunigung des Endlosformkörpers (11) auf einen Wert

$$\overline{a} = \frac{10}{\delta\left[\frac{1}{\beta}\right]^{0,3}},$$

wobei β das Verhältnis von Länge (L) zu Durchmesser (D) des Extrusionskanals (8) ist und der Wert des Steuerparameters δ mindestens 0,3 beträgt.

**16.** Verfahren nach Anspruch 15, **dadurch gekennzeichnet, dass** der Wert des Steuerparameters δ mindestens 0,6 beträgt.

**17.** Verfahren nach Anspruch 16, **dadurch gekennzeichnet, dass** der Wert des Steuerparameters 8 mindestens 1,5 beträgt.

**18.** Verfahren nach Anspruch 17, **dadurch gekennzeichnet, dass** der Wert des Steuerparameters δ mindestens 2,2 beträgt.

**19.** Verfahren nach einem der Ansprüche 15 bis 18, **gekennzeichnet durch** folgenden Verfahrensschritt:

- Steuern der Extrusionsgeschwindigkeit $v_E$ des Endlosformkörpers (11) **durch** die Extrusionskanalöffnung (10) in Abhängigkeit von der Beschleunigung $\overline{a}$.

**20.** Verfahren nach einem der Ansprüche 15 bis 19, **gekennzeichnet durch** folgenden Verfahrensschritt:

- Im wesentliches zugspannungsfreies Fördern des extrudierten Endlosformkörpers (11) auf einer nach dem Luftspalt (12) oder einer Koagulationsbadzone (14) angeordneten Fördereinrichtung (20) zu einem Abzugswerk (15).

**21.** Verfahren nach Anspruch 20, **gekennzeichnet durch** folgenden Verfahrensschritt:

- Steuern der Fördergeschwindigkeit der Fördereinrichtung (20) in Abhängigkeit von der mittleren Beschleunigung $\overline{a}$.

**22.** Verfahren nach einem der Ansprüche 15 bis 21, **gekennzeichnet durch** folgenden Verfahrensschritt:

- Abziehen des extrudierten Endlosformkörpers (11) nach der Durchquerung des Luftspaltes (12) **durch** ein Abzugswerk (15) mit einer Abzugsgeschwindigkeit $v_A$.

**23.** Verfahren nach Anspruch 22, **gekennzeichnet durch** folgenden Verfahrensschritt:

- Steuern der Abzugsgeschwindigkeit $v_A$ des Endlosformkörpers (11) **durch** das Abzugswerk (15) in Abhängigkeit von der Beschleunigung $\overline{a}$.

**24.** Verfahren nach einem der Ansprüche 15 bis 23, **gekennzeichnet durch** folgenden Verfahrensschritt:

- Steuern der Extrusionsgeschwindigkeit $v_E$ des Endlosformkörpers (11) **durch** die Extrusionskanalöffnung (10) und/oder der Abzugsgeschwindigkeit $v_A$ des Endlosformkörpers (11) **durch** das Abzugswerk (15) nach folgender Formel:

$$v_A^2 - v_E^2 = \gamma \cdot H \cdot \overline{a},$$

wobei H die Luftspalthöhe und γ ein Korrekturfaktor mit einem Wert zwischen 7 und 7,4 ist.

**25.** Verfahren nach Anspruch 24, **dadurch gekennzeichnet, dass** der Wert des Korrekturfaktors γ um 7.2 beträgt.

**26.** Verfahren nach einem Ansprüche 15 bis 25, **gekennzeichnet durch** folgenden Verfahrensschritt:

- Verstrecken des extrudierten Endlosformkörpers nach seinem Austritt aus der Extrusionskanalöffnung im Luftspalt (12) **durch** eine Luftströmung in Extrusionsrichtung um den extrudierten Endlosformkörper, wobei die Strömungsgeschwindigkeit der Luft (13) größer als die Extrusionsgeschwindigkeit des Endlosformkörpers (11) ist.

**27.** Verfahren nach Anspruch 26, **gekennzeichnet durch** folgenden Verfahrensschritt:

- Steuerung der Geschwindigkeit der Luft (13) in Abhängigkeit von der mittleren Beschleunigung $\bar{a}$ und/oder der mittleren Wärmestromdichte Q im Luftspalt (12).

**Claims**

**1.** A method for extruding a continuously molded body from an extrusion solution, in particular an extrusion solution containing cellulose, water and a tertiary amine oxide, comprising the following steps:

- passing the extrusion solution through an extrusion duct of a predetermined length and a predetermined diameter to an extrusion duct orifice;
- extruding the extrusion solution through the extrusion duct orifice to obtain an extruded, continuously molded body;
- passing the continuously molded body through an air gap of a predetermined air gap height;
- accelerating the continuously molded body in the air gap;

**characterized by** the following steps:

- controlling the heat flow density Q substantially averaged over the air gap height to obtain a value

$$Q = \frac{0.004}{\alpha \cdot \left[\dfrac{1}{\beta}\right]^{0.3}},$$

where β is the ratio of length to diameter of the extrusion duct and the value of the control parameter α is at least 0.1.

**2.** The method according to claim 1, **characterized in that** the value of the control parameter α is at least 0.2

**3.** The method according to claim 2, **characterized in that** the value of the control parameter α is at least 0.5.

**4.** The method according to claim 3, **characterized in that** the value of the control parameter α is at least 1.0.

**5.** The method according to any one of the aforementioned claims, **characterized by** the following step:

- controlling temperature $T_E$ of the extrusion solution in response to the heat flow density Q.

**6.** The method according to any one of the aforementioned claims, **characterized by** the following step:

- controlling temperature $T_L$ of the air surrounding the continuously molded body (11) in the air gap (12) in response to the heat flow density Q.

**7.** The method according to claim 5 and/or 6, **characterized by** the following step:

- controlling a temperature difference $\Delta T = T_E - T_L$ between temperature $T_E$ of the extrusion solution and temperature $T_L$ of the air surrounding the continuously molded body (11) in the air gap (12) to obtain a value:

$$\Delta T = \frac{H}{d} \cdot \frac{0.004}{\dot{m} \cdot c_E \cdot \alpha \cdot \left[\dfrac{1}{\beta}\right]^{0.3}},$$

where $\dot{m}$ is the throughput of the extrusion solution through the extrusion duct orifice in g/s, $c_E$ is the specific thermal capacity of the extrusion solution, in $W/mm^3$, d the hole density of the bores provided in the die plate, in $hole/mm^2$, and H in mm the length of the air gap.

**8.** The method according to claim 7, **characterized in that** value β is at least 2.

**9.** The method according to claim 8, **characterized in that** value β is not more than 150.

**10.** The method according to claim 9, **characterized in**

that value β is not more than 100.

11. The method according to claims 5 to 10, **characterized in that** temperature $T_L$ is controlled at a temperature $T_E$ which is kept substantially constant.

12. The method according to claims 5 to 10, **characterized in that** temperature $T_E$ is controlled at a temperature $T_L$ which is kept substantially constant.

13. The method according to any one of the aforementioned claims, **characterized in that** the specific thermal capacity $c_E$ of the extrusion solution is at least 2.1 J/(g K).

14. The method according to any one of the aforementioned claims, **characterized in that** the specific thermal capacity $c_E$ of the extrusion solution is not more than 2.9 J/(g K).

15. The method according to any one of the aforementioned claims, **characterized by** the following step:

   - controlling the acceleration of the continuously molded body (11) which has been averaged substantially over the air gap height (H) to obtain a value

$$\bar{a} = \frac{10}{\delta \left[ \dfrac{1}{\beta} \right]^{0.3}},$$

   where β is the ratio of length (L) to diameter (D) of the extrusion duct (8) and the value of the control parameter δ is at least 0.3.

16. The method according to claim 15, **characterized in that** the value of the control parameter δ is at least 0.6.

17. The method according to claim 16, **characterized in that** the value of the control parameter δ is at least 1.5.

18. The method according to claim 17, **characterized in that** the value of the control parameter δ is at least 2.2.

19. The method according to any one of claims 15 to 18, **characterized by** the following step:

   - controlling the extrusion velocity $v_E$ of the continuously molded body (11) through the extrusion duct opening (10) in response to acceleration $\bar{a}$.

20. The method according to any one of claims 15 to 19, **characterized by** the following step:

   - conveying the extruded, continuously molded body (11) substantially without any tensile stress on a conveying means (20) arranged after the air gap (12) or a coagulation bath zone (14), to a withdrawal mechanism (15).

21. The method according to claim 20, **characterized by** the following step:

   - controlling the conveying speed of the conveying means (20) in response to the average acceleration $\bar{a}$.

22. The method according to any one of claims 15 to 21, **characterized by** the following step:

   - withdrawing the extruded, continuously molded body (11) after passage through the air gap (12) by a withdrawal mechanism (15) at a withdrawal speed $v_A$.

23. The method according to claim 22, **characterized by** the following step:

   - controlling the withdrawal speed $v_A$ of the continuously molded body (11) by the withdrawal mechanism (15) in response to acceleration $\bar{a}$.

24. A method according to any one of claims 15 to 23, **characterized by** the following step:

   - controlling the extrusion speed $v_E$ of the continuously molded body (11) through the extrusion duct orifice (10) and/or the withdrawal speed $v_A$ of the continuously molded body (11) by the withdrawal mechanism (15) according to the following formula:

$$v_A^2 - v_E^2 = \gamma \cdot H \cdot \bar{a},$$

   where H is the air gap height and γ a correction factor having a value between 7 and 7.4.

25. The method according to claim 24, **characterized in that** the value of the correction factor y is about 7.2.

26. The method according to any one of claims 15 to 25, **characterized by** the following step:

   - stretching the extruded, continuously molded body after its exit from the extrusion duct orifice in the air gap (12) by an air flow in the extrusion direction around the extruded, continuously molded body, wherein the flow velocity of air (13) is greater than the extrusion speed of the continuously molded body (11).

27. The method according to claim 26, **characterized by** the following step:

    - controlling the velocity of air (13) in response to the mean acceleration $\bar{a}$ and/or the mean heat flow density Q in the air gap (12).

**Revendications**

1. Procédé pour extruder un corps profilé continu à partir d'une solution d'extrusion, en particulier une solution d'extrusion contenant de cellulose, d'eau et d' oxyde d'amine tertiaire, comprenant les étapes suivantes :

    - passage de la solution d'extrusion dans un conduit d'extrusion d'une longueur et d'un diamètre prédéfinis, jusqu'à une ouverture de conduit d'extrusion ;
    - extrusion de la solution d'extrusion à travers l'ouverture de conduit d'extrusion pour former un corps profilé continu extrudé ;
    - passage du corps profilé continu dans un entrefer d'une hauteur prédéfinie ;
    - accélération du corps profilé continu dans ledit entrefer ;

    **caractérisé par** l'étape suivante :

    - commande de la densité de l'écoulement calorifique Q dont la moyenne est calculée essentiellement sur la hauteur d'entrefer (H), vers une valeur

    $$Q = \frac{0,004}{\alpha \cdot [1/\beta]^{0,3}},$$

    désignant le rapport de la longueur au diamètre du conduit d'extrusion, et la valeur du paramètre de commande $\alpha$ étant d'au moins 0,1.

2. Procédé selon la revendication 1, **caractérisé en ce que** la valeur du paramètre de commande $\alpha$ est d'au moins 0,2.

3. Procédé selon la revendication 2, **caractérisé en ce que** la valeur du paramètre de commande $\alpha$ est d'au moins 0,5.

4. Procédé selon la revendication 3, **caractérisé en ce que** la valeur du paramètre de commande $\alpha$ est d'au moins 1,0.

5. Procédé selon l'une des revendications spécifiées précédemment, **caractérisé par** l'étape suivante :

    - commande de la température $T_E$ de la solution d'extrusion en fonction de la densité de l'écoulement calorifique Q.

6. Procédé selon l'une des revendications spécifiées précédemment, **caractérisé par** l'étape suivante :

    - commande de la température $T_L$ de l'air qui entoure le corps profilé continu (11) dans l'entrefer (12) en fonction de la densité de l'écoulement calorifique Q.

7. Procédé selon les revendications 5 et/ou 6, **caractérisé par** l'étape suivante :

    - commande d'une différence de température $T = T_E - T_L$, entre la température $T_E$ de la solution d'extrusion et la température $T_L$ de l'air qui entoure le corps profilé continu (11) dans l'entrefer (12) vers une valeur :

    $$\Delta T = \frac{H}{d} \cdot \frac{0,004}{\dot{m} \cdot c_E \cdot \alpha \cdot [1/\beta]^{0,3}}$$

    $\dot{m}$ désignant le débit massique de la solution d'extrusion à travers l'ouverture de conduite d'extrusion en g/s, $c_E$ la capacité thermique spécifique de la solution d'extrusion en W/mm$^3$, d la densité de trous des perçages prévus sur la plaque de filière en trou/mm$^2$, et H la longueur de l'entrefer en mm.

8. Procédé selon la revendication 7, **caractérisé en ce que** la valeur est d'au moins 2.

9. Procédé selon la revendication 8, **caractérisé en ce que** la valeur est au maximum de 150.

10. Procédé selon la revendication 9, **caractérisé en ce que** la valeur est au maximum de 100.

11. Procédé selon l'une des revendications 5 à 10, **caractérisé en ce que** la température $T_L$ est commandée à une température $T_E$ maintenue essentiellement constante.

12. Procédé selon l'une des revendications 5 à 10, **caractérisé en ce que** la température $T_E$ est commandée à une température $T_L$ maintenue essentiellement constante.

13. Procédé selon l'une des revendications spécifiées précédemment, **caractérisé en ce que** la capacité thermique spécifique $c_E$ de la solution d'extrusion est d'au moins 2,1 J/(gK).

**14.** Procédé selon l'une des revendications spécifiées précédemment, **caractérisé en ce que** la capacité thermique spécifique $c_E$ de la solution d'extrusion est au maximum de 2,9 J/(gK).

**15.** Procédé selon l'une des revendications spécifiées précédemment, **caractérisé par** l'étape suivante :

- commande de l'accélération du corps profilé continu (11) dont la moyenne est calculée essentiellement sur la hauteur d'entrefer (H), vers une valuer

$$\bar{\alpha} = \frac{10}{\delta[1/\beta]^{0,3}}$$

désignant le rapport de la longueur (L) au diamètre (D) du conduit d'extrusion (8), et la valeur du paramètre de commande $\delta$ étant d'au moins 0,3.

**16.** Procédé selon la revendication 15, **caractérisé en ce que** la valeur du paramètre de commande $\delta$ est d'au moins 0,6.

**17.** Procédé selon la revendication 16, **caractérisé en ce que** la valeur du paramètre de commande $\delta$ est d'au moins 1,5.

**18.** Procédé selon la revendication 17, **caractérisé en ce que** la valeur du paramètre de commande $\delta$ est d'au moins 2,2.

**19.** Procédé selon l'une des revendications 15 à 18, **caractérisé par** l'étape suivante :

- commande de la vitesse d'extrusion $v_E$ du corps profilé continu (11) à travers l'ouverture de conduit d'extrusion (10) en fonction de l'accélération moyenne

**20.** Procédé selon l'une des revendications 15 à 19, **caractérisé par** l'étape suivante :

- acheminement essentiellement sans contrainte de traction du corps profilé continu extrudé (11) sur un convoyeur (20) qui est disposé après l'entrefer (12) ou après une zone de bain de coagulation (14), jusqu'à un dispositif d'évacuation (15).

**21.** Procédé selon la revendication 20, **caractérisé par** l'étape suivante :

- commande de la vitesse d'acheminement du convojeur (20) en fonction de l'acc l ration moyenne .

**22.** Procédé selon l'une des revendications 15 à 21, **caractérisé par** l'étape suivante :

- évacuation du corps profilé continu extrudé (11 ), après la traversée de l'entrefer (12), par un dispositif d'évacuation (15) à une vitesse d'évacuation $v_A$.

**23.** Procédé selon la revendication 22, **caractérisé par** l'étape suivante :

- commande de la vitesse d'évacuation $v_A$ du corps profilé continu (11) par le dispositif d'évacuation (15) en fonction de l'acc l ratio n moyenne .

**24.** Procédé selon l'une des revendications 15 à 23, **caractérisé par** l'étape suivante :

- commande de la vitesse d'extrusion $v_E$, du corps profilé continu (11) à travers l'ouverture de conduit d'extrusion (10) et/ou de la vitesse d'évacuation vA du corps profilé continu (11) par le dispositif d'évacuation (15) selon la formule suivante :

$$v_A^2 - v_E^2 = \gamma \cdot H \cdot \bar{a},$$

dans laquelle H désigne la hauteur d'entrefer et un facteur de correction avec une valeur située entre 7 et 7,4.

**25.** Procédé selon la revendication 24, **caractérisé en ce que** la valeur du facteur de correction est d'enviro n 7,2.

**26.** Procédé selon l'une des revendications 15 à 25, **caractérisé par** l'étape suivante :

- étirage du corps profilé continu extrudé après sa sortie de l'ouverture de conduit d'extrusion dans l'entrefer (12) par un écoulement d'air dans le sens d'extrusion autour du corps profilé continu extrudé, la vitesse d'écoulement de l'air (13) étant supérieure à la vitesse d'extrusion du corps profilé continu (11 ).

**27.** Procédé selon la revendication 26, **caractérisé par** l'étape suivante :

- commande de la vitesse de l'air (13) en fonction de l'acc l ratio n moyenne et/ou de la densité de l'écoulement calorifque Q dans l'entrefer (12).